# EUROPEAN PATENT APPLICATION

(11) **EP 4 382 365 A1**
(43) Date of publication of application: **12.06.2024**
(21) Application number: 22212023.0
(22) Date of filing: 07.12.2022
(51) Int. Cl.: B60R 1/28, B60Q 1/34, B60Q 1/00, B60R 1/23, G06V 20/56, H04N 5/262, H04N 7/18

(54) **VIRTUAL MIRROR SYSTEM WITH A FIELD OF VIEW ACTIVATION**

(71) Applicant: Volvo Car Corporation, 405 31 Göteborg (SE)
(72) Inventor: WICKMAN, Casper, 40531 Göteborg (SE)
(74) Representative: Maiwald GmbH

(57) **Abstract**

A virtual mirror system for a vehicle, comprising: at least one camera means (21) configured to provide video data for an enhanced field of view or video data for a mirror field of view; at least one display unit (10) configured to display the video data of the at least one camera means (21); and at least one sensor unit (16) integrated into a turn signal element (14) of the vehicle (20), whereby the at least one sensor unit (16) is configured to identify/detect a movement of a driver of the vehicle (20) with respect to the turn signal element (14); whereby the video data referring to the enhanced field of view is displayed in the at least one display unit (10), if the at least one sensor unit (16) identifies/detects a movement of the driver with respect to the turn signal element (14).

## Description

### TECHNICAL FIELD

The present disclosure relates to a virtual mirror system for a vehicle, a vehicle with the virtual mirror system and a use of a sensor unit, a display unit, and/or a camera means in the disclosed virtual mirror system.

### BACKGROUND ART

Known vehicles comprise camera mirror systems to provide virtual mirrors, whereby cameras are mounted on both sides of the vehicle and transmit video streams to display units inside of the vehicle. In many cases, these systems provide the same field of view as conventional exterior mirrors; additionally, some of these systems may provide an enhanced field of view if the turn signal is activated. However, dangerous traffic situations may occur when the extended field of vision is activated only when the turn signal is activated, since other vehicles are not visible or only poorly visible in the conventional field of view.

In view of this, it is found that a further need exists to provide an improved virtual mirror system for a vehicle.

### SUMMARY

In the view of the above, it is an object of the present disclosure to provide an improved virtual mirror for a vehicle.

The problem is at least partially solved or alleviated by the subject matter of the independent claims of the present disclosure, whereby further examples are incorporated in the dependent claims.

According to a first aspect, a virtual mirror system for a vehicle, comprising:
at least one camera means configured to provide video data for an enhanced field of view or video data for a mirror field of view;
at least one display unit configured to display the video data of the at least one camera means; and
at least one sensor unit integrated into a turn signal element of the vehicle, whereby the at least one sensor unit is configured to identify/detect a movement, an approach and/or a contact of a driver of the vehicle with respect to the turn signal element; whereby
the video data referring to the enhanced field of view is displayed in the at least one display unit, if the at least one sensor unit identifies/detects a movement, an approach and/or a contact of the driver with respect to the turn signal element.

The at least one camera means for providing the video data may comprise, for example, a unit, device and/or apparatus configured to provide video data, whereby the unit and/or apparatus may comprise a camera. The unit, the apparatus, the device and/or the camera may therefore be configured to provide the video data. Furthermore, the at least one camera means may comprise, for example, an optical and/or radar sensor for detecting a field of view of the at least one camera means, whereby the optical and/or radar sensor may be configured to detect objects within the field of view of the at least one camera means.

The video data may for example be configured to be able to generate moving images respectively a video and/or video stream. Therefore, the video data may comprise, for example, an image signal or a video signal from the at least one camera means or an image signal or a video signal processed by a computing unit of the vehicle.

The at least one sensor unit comprises, for example, a proximity sensor and/or proximity switch, which may be configured as an mechanical sensor, optical sensor, piezoelectric sensor, capacitive sensor and/or as a light switch. Thereby, the at least one sensor unit may at least be configured to detect at least one body part and or the movement of a body part, in particular the approach of a body part to the at least one sensor unit, of a user of the vehicle.

The turn signal element may be configured to control a light element of the vehicle to indicate a planned lane change and/or turn of the vehicle. Therefore, the turn signal element may detect inputs from the driver and control the light element, preferably a turn signal of the vehicle, based on the input.

The mirror field of view and/or the enhanced field of view may be a representation of the environment of the vehicle, which may be based on data of the optical and/or the radar sensor. In addition, the enhanced field of view may be an enhanced representation of the vehicle's environment compared to the mirror field of view.

The activation of the enhanced field of view may therefore for example only be based on the identification/detection of the movement, the approach and/or the contact of the driver, which is independent of an activation of at least one turn signal of the vehicle. Moreover, the enhanced field of view may not be affected by an activation of at least one turn signal of the vehicle.

For example, merely the identification/detection of the movement, the approach, and/or the touch of the driver with respect to the turn signal element may activate the enhanced field of view. Furthermore, the enhanced field of view may, for example, be activated by a computing unit of the vehicle. However, activating a turn signal of the vehicle may not activate the enhanced field of view.

Hence, in other words, the virtual mirror system may detect if the driver intends to activate the turn signal and temporarily activate the enhanced field of view. Thereby, the virtual mirror system may, but not limited to, receive sensor data of the at least one sensor unit, which may be arranged in a turn signal element. Thus it may be ensured that the enhanced field of view is activated before the turn signal of the vehicle is activated, so that the driver may be presented with an improved environment view of the vehicle. For example, the enhanced field of view may be activated while the turn signal is active and/or from activation of the enhanced field of view for a defined period of time.

Furthermore, if the driver does not operate and/or does not want to operate the vehicle's turn signal, the at least one display unit may be used, for example, to display further video data of the vehicle.

Further, in other words, the driver's intention to operate the vehicle's turn signal, in particular a movement of the driver's hand toward the turn signal element, may be detected by the at least one sensor unit. If the at least one sensor unit has detected the driver's intention to operate the turn signal, the virtual mirror system may display the enhanced field of view. The driver may be shown the enhanced field of view in order until the driver has verified that the environment surrounding the vehicle is free of obstacles.

Thereby, for example, the driver may be provided with an optimal field of view of the vehicle's surroundings while using the vehicle, in particular to change from one lane to another lane.

In an implementation, if no movement, approach and/or contact of the driver with respect to the turn signal element may be identified/detected by the at least one sensor unit, the video data referring to the mirror field of view may be displayed in the at least one display unit.

In other words, the video data referring to the enhanced field of view may be displayed in the at least one display unit, if the at least one sensor unit may be identify/detect a movement, an approach and/or a contact of the driver with respect to the turn signal element, otherwise, the video data referring to the mirror field of view may be displayed in the at least one display unit.

Further, in other words, the virtual mirror system may display to a driver of the vehicle the mirror field of view, which is comparable to the display of exterior side mirrors, if the driver does not and/or will not operate the turn signal of the vehicle.

In an implementation, the enhanced field of view may represents a side view of the vehicle, for example of the left and/or right side of the vehicle, the side view comprising a range consisting of a rear distance of the vehicle and a side distance of the vehicle of the respective displayed side of the vehicle combined with an additional distance.

The rear distance, the side distance and/or the additional distance may comprise a distance or a length, indicating, for example in meter [m].

The rear distance may for example be a distance starting from the at least one camera means to the rear area of the vehicle. The rear distance may be in a range from 10 meter [m] to 100 meter [m].

The side distance may for example be a distance starting from the at least one camera means to the left and/or right side of the vehicle. The side distance may be in a range from 5 meter [m] to 50 meter [m].

The additional distance may for example be an additional distance from the at least one camera means and/or the side distance to the left and/or right side of the vehicle. The additional distance may be in a range from 1 meter [m] to 20 meter [m].

Furthermore, the additional distance may vary depending on the driving situation, vehicle and/or driver, whereby for example the distance may be adjusted. Furthermore, it may for example be possible that the additional distance may be adjusted by a manufacturer of the vehicle, a repair shop for the vehicle and/or the driver.

The enhanced field of view may be, for example, a field of view formed by the rear distance and the side distance in combination with the additional distance starting from the at least one camera means, in order to form a side field of view of one side of the vehicle representing the enhanced field of view.

In an implementation, the mirror field of view may represents a side view of the vehicle, for example of the left and/or right side of the vehicle, the side view comprising a range consisting of a rear distance of the vehicle and a side distance of the vehicle of the respective displayed side of the vehicle.

The mirror field of view may be, for example, a field of view formed by the rear distance and the side distance starting from the at least one camera means, in order to form a side field of view of one side of the vehicle representing the mirror field of view.

The mirror field of view may for example be comparable to a field of view represented by an exterior side mirror of a vehicle.

In an implementation, the side view of the vehicle may represents a triangular area.

The triangular area may be formed, for example, by the rear distance and the side distance, or by the rear distance, the side distance and the additional distance. Furthermore, the additional distance may extend or enlarge the side distance to form the triangular area.

Therefore, the rear distance may defines a first side of the triangular area and the side distance and/or the additional distance may defines a second side of the triangular area. The triangular area may proceed from a first end of the first side from the at least one camera means of the displayed side to a rear of the vehicle and a second end of the first side. Further, the second side proceeds from a first end of the second side and seated on the second end of the first side at the rear of the vehicle to a side of the vehicle and a second end of the second side. Thus, a third side of the triangular area may be formed, starting from the first end of the first side to the second end of the second side.

Furthermore, the triangular area may be formed as for example an approximately right-angled triangular area. Therefore, the rear distance may define a fourth side, in particular the adjacent side, of the approximately right-angled triangular area and the side distance and/or the additional distance may define a fifth side, in particular the opposite side, of the approximately right-angled triangular area. The approximately right-angled triangular area may proceed from a first end of the fourth side from the at least one camera means of the displayed side to a rear of the vehicle and a second end of the fourth side. Further, the fifth side proceeds from a first end of the fifth side and seated on the second end of the fourth side at the rear of the vehicle to a side of the vehicle and a second end of the fifth side, and the fourth side and the fifth side may define an approximately right angle of the approximately right-angled triangular area between them at the rear of the vehicle. Thus, a sixth side of the approximately right-angled triangular area may be formed, starting from the first end of the fourth side to the second end of the fifth side.

In an implementation, the turn signal element may be a turn signal lever arranged at a steering wheel of a vehicle, and whereby the at least one sensor unit is integrated in a top part of the turn signal lever and/or in a bottom part of the turn signal lever.

The turn signal lever may be arranged and configured on the steering wheel in order to be moved by the driver in at least two directions to activate a turn signal corresponding to each of the direction of movement of the turn signal lever.

In other words, the at least one sensor unit may be arranged at the upper or lower part of the turn signal lever, for example, a first sensor unit may be arranged at the upper end and a second sensor unit may be arranged at the lower end of the turn signal lever.

In an implementation, the turn signal element may be integrated in a steering wheel of a vehicle, and whereby the at least one sensor unit is integrated in the steering wheel.

The turn signal element may, for example, be configured as a rotary, push and/or rotary-push actuator and detect inputs from the driver to activate the turn signal.

Furthermore, the at least one sensor unit may be arranged within the respective actuator of the turn signal element and/or within the steering wheel.

In an implementation, the virtual mirror system may further comprise at least one computing unit configured to process the video data provided by the at least one camera means.

The at least one computing unit may for example be a computing unit of the vehicle or a computing unit of the virtual mirror system configured to process the video data. In addition, the virtual mirror system may comprise one or more computing units to provide optimized processing and/or to provide fail-safety.

In an implementation, the virtual mirror system may be configured to switch the video data displayed on the display from the enhanced field of view to the mirror field of view after a predetermined time.

For example, the predetermined time may be in a range of 10 seconds to 30 seconds, in particular 15 seconds.

In addition, for example, the at least one computing unit may be configured to track a time of activation of the enhanced field of view and to deactivate the enhanced field of view when the predetermined time is reached.

In an implementation, the predetermined time may be based for example on the placement of the at least one display unit in the interior of the vehicle, the distance of the at least one display unit to the driver and/or the additional distance.

For example, the predetermined time may be varied, such as being longer or shorter, depending on the distance of the at least one display unit from the driver, on an amount of the additional distance and/or the arrangement of the at least one display unit in the interior of the vehicle.

In an implementation, the virtual mirror system may be further configured to prolong the predetermined time, if the at least one sensor unit detects a movement, an approach and/or a contact of the driver with respect to the turn signal element.

For example, the predetermined time may be prolonged in a range of 5 seconds to 30 seconds, in particular 10 seconds.

In an implementation, the virtual mirror system may be further configured to switch the video data displayed on the display from the enhanced field of view to the mirror field of view after a maximum time.

For example, the maximum time may be in a range of 10 seconds to 80 seconds, in particular 50 seconds.

In addition, for example, the at least one computing unit may be configured to track a time of activation of the enhanced field of view and to deactivate the enhanced field of view when the maximum time is reached.

In an implementation, the turn signal element and/or the at least one computing unit may be configured to control at least one turn signal of the vehicle.

In other words, the at least one turn signal may be deactivated either by the driver or by the at least one computing unit of the vehicle.

In other words, the vehicle may be equipped with cameras on right- and/or lefthand side of the vehicle, which may supply a real-time video stream to a camera processing unit and/or the computer unit, whereby the camera processing unit and/or the computer unit may be a stand-alone unit or being integrated as a part of the virtual mirror system or other processing units of the vehicle. The video stream from the cameras may be processed in the camera processing unit and/or in the computer unit in order to, for example, crop the video stream, adjust the image quality, adjust the images, remove reflections, and/or perform other similar operations. The processed video stream may be displayed on the at least one display unit, preferably a first display unit on a left side of the interior of the vehicle, displaying the left side of the vehicle, and a second display unit on a right side of the interior of the vehicle, displaying the right side of the vehicle. Furthermore, the vehicle may comprise turn signal elements integrated in and/or arranged on the steering wheel, whereby the turn signal elements may comprise at least one sensor unit, which may be arranged in a top or a bottom part of the turn signal element.

Moreover, the first display unit and the second display unit may display the mirror field of view if the driver not use and/or may not intend to use the turn signal element. If the driver intends to use the turn signal element, approaches the turn signal element and/or puts his hand on the turn signal element this may be detected by the at least one sensor unit. In addition, the at least one sensor unit may detect whether the driver wants to activate the left or right turn signal. Accordingly, the virtual mirror system may display the enhanced field of view on the first display unit or the second display unit, depending on whether the driver wants to activate the left or the right turn signal.

Further, the enhanced field of view may only be enabled for a predetermined time until the mirror field of view is displayed again, whereby the predetermined time may be prolonged, but the predetermined time may only be prolonged up to a maximum time. The activation time of the enhanced field of view may for example be detected and processed by the computer unit. In addition, for example, the computer unit may deactivate the enhanced field of view and reactivate the mirror field of view. Furthermore, the enhanced field of view may for example be deactivated if the turn signal is switched off and/or if the driver deactivate it.

Additionally, it may be possible, for example, that before activating the turn signal, the driver may need to check the environment of the vehicle, which may need to be free of obstacles.

A further aspect of the present disclosure relates to a vehicle with the disclosed virtual mirror system.

A further aspect of the present disclosure relates to a use of a sensor unit, a display unit, and/or a camera means in the disclosed virtual mirror system.

### BRIEF DESCRIPTION OF DRAWINGS

In the following, the disclosure is described exemplarily with reference to the enclosed figures, in which:
- **Fig. 1a**: is a first schematic illustration of an example of the implementation of a virtual mirror system;
- **Fig. 1b**: is a second schematic illustration of the example of Fig. 1a of the implementation of a virtual mirror system;
- **Fig. 2a**: is a schematic illustration of a first example of the configuration of a turn signal element;
- **Fig. 2b**: is a schematic illustration of a second example of the configuration of a turn signal element;
- **Fig. 3**: is a schematic illustration showing an example of a mirror field of view of the virtual camera mirror system; and
- **Fig. 4**: is a schematic illustration showing an example of an enhanced field of view of the virtual camera mirror system.

Notably, the figures are merely schematic representations and serve only to illustrate examples of the present disclosure. Identical or equivalent elements are in principle provided with the same reference signs.

### DETAILED DESCRIPTION

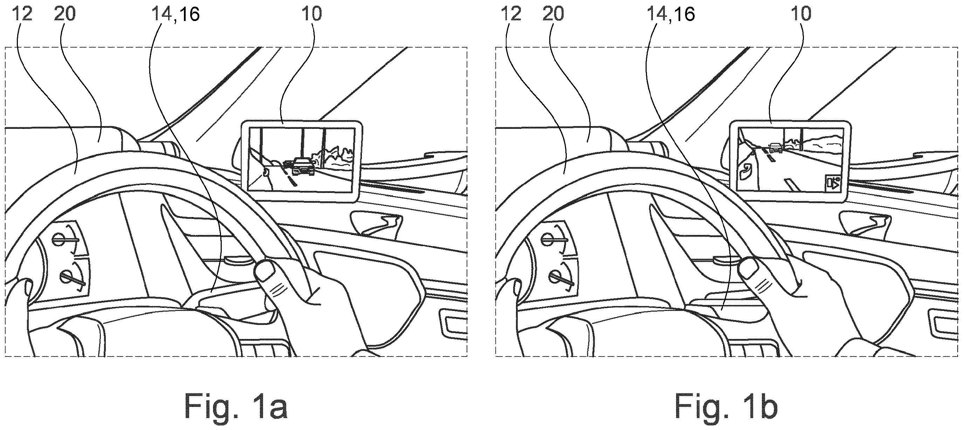

**Fig. 1a** and **Fig. 1b** shows a first and a second schematic illustration of an example of the implementation of a disclosed virtual mirror for a vehicle 20, comprising: at least one camera means (not shown) configured to provide a video data for an enhanced field of view or video data for a mirror field of view; at least one display unit 10 configured to display the video data of the at least one camera means; and 16 integrated into a turn signal element 14 of the vehicle 20, whereby the at least one sensor unit 16 is configured to detect a movement, an approach and/or a contact of the driver with respect to the turn signal element 14; whereby the video data referring to the enhanced field of view is displayed in the at least one display unit 10, if the at least one sensor unit 16 detects a movement, an approach and/or a contact of the driver with respect to the turn signal element 14, otherwise, the video data referring to the mirror field of view is displayed in the at least one display unit 10.

Thereby **Fig. 1a** shows the mirror field of view in the at least one display unit 10 and **Fig. 1b** shows the enhanced field of view in the at least one display unit 10.

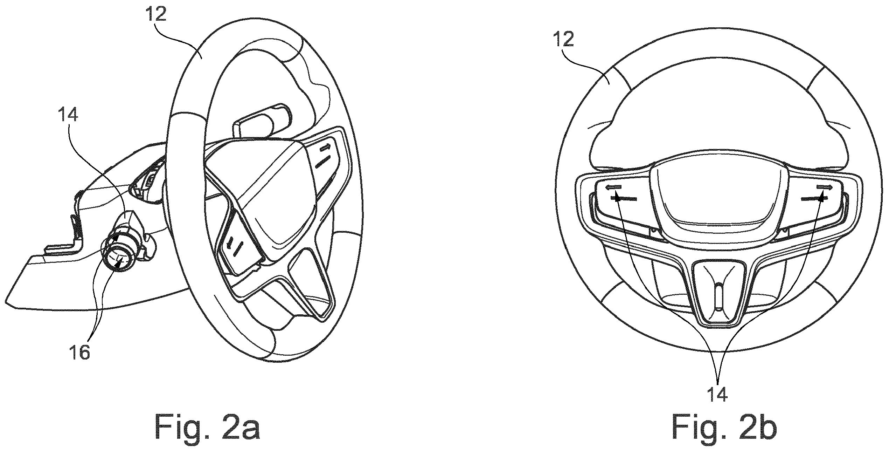

**Fig. 2a** shows a schematic illustration of a first example of the configuration of a turn signal element, whereby the turn signal element 14 is a turn signal lever arranged at a steering wheel 12 of a vehicle, and whereby the at least one sensor unit 16 is integrated in a top part of the turn signal lever and/or in a bottom part of the turn signal lever.

Furthermore, the at least one sensor unit 16 comprises a first sensor arranged above and a second sensor arranged below the turn signal lever.

**Fig. 2b** shows a schematic illustration of a second example of the configuration of a turn signal element, whereby the turn signal element 14 is integrated in a steering wheel 12 of a vehicle, and whereby the at least one sensor unit is integrated in the steering wheel 12.

The arrangement of the at least one sensor unit may vary depending on the steering wheel 12 and/or the sensors used. Furthermore, the at least one sensor unit may be integrated in the turn signal element 14.

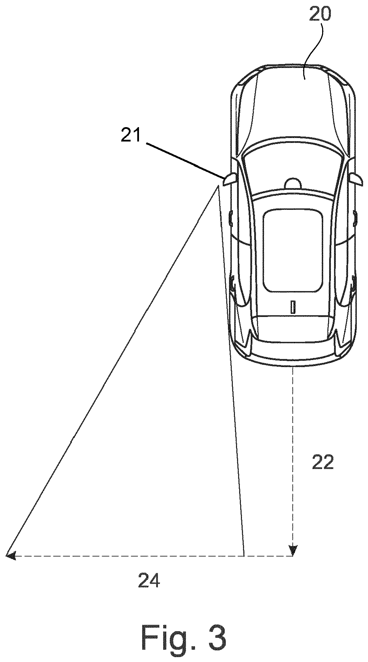

**Fig. 3** shows a schematic illustration showing an example of a mirror field of view of the virtual camera mirror system, whereby the mirror field of view represents a side view of the vehicle 20, in the example the left side of the vehicle 20, the side view comprising a range consisting of a rear distance 22 of the vehicle 20 and a side distance 24 of the vehicle 20 of the respective displayed side of the vehicle 20.

The mirror field of view represents a field of view of the left side of the vehicle 20, which forms a triangular area starting from the at least one camera means 21 over the rear distance 22 and the side distance 24.

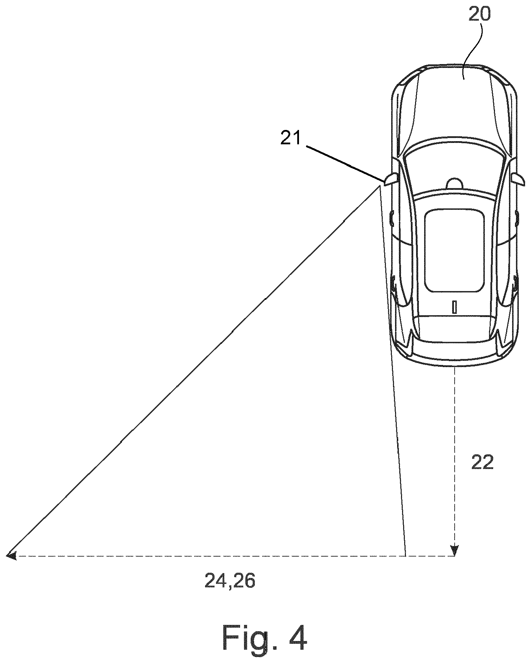

**Fig. 4** shows a schematic illustration showing an example of an enhanced field of view of the virtual camera mirror system, whereby the enhanced field of view represents a side view of the vehicle 20, in the example the left and side of the vehicle 20, the side view comprising a range consisting of a rear distance 22 of the vehicle 20 and a side distance 24 of the vehicle 20 of the respective displayed side of the vehicle 20 combined with an additional distance 26.

The mirror field of view represents a field of view of the left side of the vehicle 20 starting from the at least one camera means 21 through the rear distance 22 and the side distance 24 combined with the additional distance 26 which forms a triangular area.

Other variations to the disclosed examples may be understood and effected by those skilled in the art in practicing the claimed subject matter, from the study of the figures, the disclosure, and the appended claims. In particular, respective parts/functions of the respective example described above may also be combined with each other. In particular, the present disclosure is not limited to specific modules, vehicle functions, user interfaces, user interface areas/fields and/or communication methods. In the claims, the word "comprising" does not exclude other elements or steps and the indefinite article "a" or "an" does not exclude a plurality. The mere fact that certain measures are recited in mutually different dependent claims does not indicate that a combination of these measures may not be used to advantage. Any reference signs in the claims should not be construed as limiting the scope of the claims.

### LIST OF REFERENCE SIGNS

- 10: At least one display unit
- 12: Steering wheel
- 14: turn signal element
- 16: at least one sensor unit
- 20: Vehicle
- 21: At least one camera means
- 22: Rear distance x
- 24: Side distance y
- 26: Additional distance z

## Claims

1. Virtual mirror system for a vehicle, comprising:
at least one camera means (21) configured to provide video data for an enhanced field of view or video data for a mirror field of view;
at least one display unit (10) configured to display the video data of the at least one camera means (21); and
at least one sensor unit (16) integrated into a turn signal element (14) of the vehicle (20), whereby the at least one sensor unit (16) is configured to identify/detect a movement, an approach and/or a contact of a driver of the vehicle (20) with respect to the turn signal element (14); whereby
the video data referring to the enhanced field of view is displayed in the at least one display unit (10), if the at least one sensor unit (16) identifies/detects a movement, an approach and/or a contact of the driver with respect to the turn signal element (14).

2. The virtual mirror system according to claim 1, whereby if no movement, approach and/or contact of the driver with respect to the turn signal element (14) is identified/detected by the at least one sensor unit (16), the video data referring to the mirror field of view is displayed in the at least one display unit (10).

3. The virtual mirror system according to claim 1 or 2, whereby the enhanced field of view represents a side view of the vehicle (20), for example of the left and/or right side of the vehicle (20), the side view comprising a range consisting of a rear distance (22) of the vehicle (20) and a side distance (24) in of the vehicle (20) of the respective displayed side of the vehicle (20) combined with an additional distance (26).

4. The virtual mirror system according to any one of the preceding claims, whereby the mirror field of view represents a side view of the vehicle (20), for example of the left and/or right side of the vehicle (20), the side view comprising a range consisting of a rear distance (22) of the vehicle (20) and a side distance (24) of the vehicle (20) of the respective displayed side of the vehicle (20).

5. The virtual mirror system according to claim 3 or 4, whereby the side view of the vehicle (20) represents a triangular area.

6. The virtual mirror system according to any one of the preceding claims, whereby the turn signal element (14) is a turn signal lever arranged at a steering wheel (12) of a vehicle (20), and whereby the at least one sensor unit (16) is integrated in a top part of the turn signal lever and/or in a bottom part of the turn signal lever.

7. The virtual mirror system according to any one of the preceding claims, whereby the turn signal element (14) is integrated in a steering wheel (12) of a vehicle (20), and whereby the at least one sensor unit (16) is integrated in the steering wheel (12).

8. The virtual mirror system according to any one of the preceding claims, whereby the virtual mirror system is further comprising at least one computing unit configured to process the video data provided by the at least one camera means (21).

9. The virtual mirror system according to any one of the preceding claims, whereby the virtual mirror system is configured to switch the video data displayed on the display from the enhanced field of view to the mirror field of view after a predetermined time.

10. The virtual mirror system according to claim 9, whereby the predetermined time is based for example on the placement of the at least one display unit (10) in the interior of the vehicle (20), the distance of the at least one display unit to the driver and/or the additional distance.

11. The virtual mirror system according to any one of the preceding claims, whereby the virtual mirror system is further configured to prolong the predetermined time, if the at least one sensor unit (16) detects a movement, an approach and/or a contact of the driver with respect to the turn signal element (14).

12. The virtual mirror system according to any one of the preceding claims, whereby the virtual mirror system is further configured to switch the video data displayed on the at least one display unit (10) from the enhanced field of view to the mirror field of view after a maximum time.

13. The virtual mirror system according to any one of the preceding claims, whereby the turn signal element (14) and/or the at least one computing unit is configured to control at least one turn signal of the vehicle (20).

14. Vehicle with a virtual mirror system according to any one of the claims 1 to 13.

15. Use of a sensor unit, a display unit, and/or a camera means in a virtual mirror system according to any one of claims 1 to 13.

## Amended claims

### Amended claims in accordance with Rule 137(2) EPC.

1. Virtual mirror system for a vehicle, comprising:
at least one camera means (21) configured to provide video data for an enhanced field of view or video data for a mirror field of view;
at least one display unit (10) configured to display the video data of the at least one camera means (21); and
at least one sensor unit (16) integrated into a turn signal element (14) of the vehicle (20), whereby the at least one sensor unit (16) is configured to identify/detect a movement, an approach and/or a contact of a driver of the vehicle (20) with respect to the turn signal element (14); whereby
the video data referring to the enhanced field of view is displayed in the at least one display unit (10), if the at least one sensor unit (16) identifies/detects a movement, an approach and/or a contact of the driver with respect to the turn signal element (14); whereby if no movement, approach and/or contact of the driver with respect to the turn signal element (14) is identified/detected by the at least one sensor unit (16), the video data referring to the mirror field of view is displayed in the at least one display unit (10).

2. The virtual mirror system according to claim 1, whereby the enhanced field of view represents a side view of the vehicle (20), for example of the left and/or right side of the vehicle (20), the side view comprising a range consisting of a rear distance (22) of the vehicle (20) and a side distance (24) in of the vehicle (20) of the respective displayed side of the vehicle (20) combined with an additional distance (26).

3. The virtual mirror system according to claim 1 or 2, whereby the mirror field of view represents a side view of the vehicle (20), for example of the left and/or right side of the vehicle (20), the side view comprising a range consisting of a rear distance (22) of the vehicle (20) and a side distance (24) of the vehicle (20) of the respective displayed side of the vehicle (20).

4. The virtual mirror system according to claim 2 or 3, whereby the side view of the vehicle (20) represents a triangular area.

5. The virtual mirror system according to any one of the preceding claims, whereby the turn signal element (14) is a turn signal lever arranged at a steering wheel (12) of a vehicle (20), and whereby the at least one sensor unit (16) is integrated in a top part of the turn signal lever and/or in a bottom part of the turn signal lever.

6. The virtual mirror system according to any one of the preceding claims, whereby the turn signal element (14) is integrated in a steering wheel (12) of a vehicle (20), and whereby the at least one sensor unit (16) is integrated in the steering wheel (12).

7. The virtual mirror system according to any one of the preceding claims, whereby the virtual mirror system is further comprising at least one computing unit configured to process the video data provided by the at least one camera means (21).

8. The virtual mirror system according to any one of the preceding claims, whereby the virtual mirror system is configured to switch the video data displayed on the display from the enhanced field of view to the mirror field of view after a predetermined time.

9. The virtual mirror system according to claim 8, whereby the predetermined time is based for example on the placement of the at least one display unit (10) in the interior of the vehicle (20), the distance of the at least one display unit to the driver and/or the additional distance.

10. The virtual mirror system according to claim 8 or 9, whereby the virtual mirror system is further configured to prolong the predetermined time, if the at least one sensor unit (16) detects a movement, an approach and/or a contact of the driver with respect to the turn signal element (14).

11. The virtual mirror system according to any one of the preceding claims, whereby the virtual mirror system is further configured to switch the video data displayed on the at least one display unit (10) from the enhanced field of view to the mirror field of view after a maximum time.

12. The virtual mirror system according to any one of the preceding claims, whereby the turn signal element (14) and/or the at least one computing unit is configured to control at least one turn signal of the vehicle (20).

13. Vehicle with a virtual mirror system according to any one of the claims 1 to 12.

14. Use of a sensor unit, a display unit, and/or a camera means in a virtual mirror system according to any one of claims 1 to 12.
